Europäisches Patentamt

(19) European Patent Office

Office européen des brevets

(11) Veröffentlichungsnummer: **0 014 838**
**B1**

# (12) EUROPÄISCHE PATENTSCHRIFT

(45) Veröffentlichungstag der Patentschrift:
16.09.81

(21) Anmeldenummer: 80100176.9

(22) Anmeldetag: 15.01.80

(51) Int. Cl.³: **F 16 K 1/44,** B 60 S 1/48

54 Ventil, insbesondere für Scheibenwaschanlagen bei Kraftfahrzeugen.

(30) Priorität: 14.02.79 DE 2905500

(43) Veröffentlichungstag der Anmeldung:
03.09.80 Patentblatt 80/18

(45) Bekanntmachung des Hinweises auf die Patenterteilung:
16.09.81 Patentblatt 81/37

(84) Benannte Vertragsstaaten:
FR GB IT SE

(56) Entgegenhaltungen:
DE-A-2 431 739
Fr-A-2 229 299

(73) Patentinhaber: **Westfälische Metall Industrie KG Hueck &
Co., Postfach 28 40, D-4780 Lippstadt (DE)**

(72) Erfinder: **Danker, Günther, Weidegrund 21,
D-4780 Lippstadt (DE)**
Erfinder: **Orth, Peter, Buchenweg 13, D-4780 Lippstadt
(DE)**

Ventil, insbesondere für Scheibenwaschanlagen bei Kraftfahrzeugen

Die Erfindung betrifft ein Ventil, insbesondere für Scheibenwaschanlagen bei Kraftfahrzeugen mit einer Eingangs- und zwei Ausgangsöffnungen, wobei die Eingangsöffnung gegenüber beiden Ausgangsöffnungen und die beiden Ausgangsöffnungen untereinander durch ein einziges Verschlussorgan absperrbar sind und eine der Öffnungen zumindest in etwa zentral zum Verschlussorgan und mindestens eine der beiden anderen Öffnungen seitlich neben der zentralen Öffnung angeordnet ist und zusammen mit der zentralen Öffnung von dem Verschlussorgan dichtend überdeckt ist.

Derartige Ventile finden Anwendung bei Waschanlagen mit zwei Düsen oder Düsengruppen zum Besprühen der Windschutzscheibe, der Schweinwerfer-Streuscheibe, der Abschlussscheibe von Leuchten o.dgl. und haben die Aufgabe, eine von einem Vorratsbehälter kommende Hauptleitung in zwei Querleitungen aufzuteilen und das Zurückfliessen der Waschflüssigkeit in den Vorratsbehälter zu verhindern. Ausserdem sollen derartige Ventile verhindern, dass die nach dem Abschalten der Pumpe in den Querleitungen verbleibende Waschflüssigkeit, insbesondere durch die bei Kurvenfahrten auftretende Zentrifugalkraft, aus den Düsen heraustritt.

Aus der DE-OS 24 31 739 und aus dem DE-GM 73 16 410 sind Ventile bekannt, bei denen ein scheibenförmiges Verschlussorgan mindestens zwei in einer Ebene angeordnete Öffnungen abdichten muss. Ein solches Ventil ist in der Praxis, insbesondere bei einer Serienfertigung, kaum herstellbar, da sich wegen der gleichzeitigen Abdeckung von zwei oder mehreren Öffnungen in einer Ebene grosse Abdichtprobleme ergeben. Durch die exzentrische Anordnung von zwei der drei Anschlussbohrungen werden ausserdem noch auf das gemeinsame Verschlussorgan exzentrisch wirkende Kräfte ausgeübt, so dass eine Kippwirkung auftreten kann. Diese Kippwirkung hat zur Folge, dass keine·gleichzeitige Öffnung aller Anschlüsse erfolgt. Dieses ist jedoch insbesondere bei solchen Anlagen erforderlich, bei denen die gesamte oder zumindest fast die gesamte Pumpenleistung genutzt wird. In dem Fall, in dem der Zulauf und die beiden Abläufe nicht gleichzeitig geöffnet werden, tritt in dem später öffnenden Zweig ein starker Druckabfall auf.

Die gleichen Nachteile zeigt das aus der DE-GM 73 01 683 bekannte Ventil.

Aufgabe der Erfindung ist es, die von einem gemeinsamen Verschlussorgan abgeschlossenen Öffnungen so anzuordnen, dass der von der Pumpe hervorgerufene Flüssigkeitsdruck nicht exzentrisch auf das Verschlussorgan einwirken kann, und dass das Unterbrechen aller drei Waschströme untereinander durch das Abdichten nur einer Öffnung in an sich bekannter Weise erfolgt. Diese Aufgabe wird erfindungsgemäss dadurch gelöst, dass die seitlich der zentralen Öffnung angeordnete und von dem Verschlussorgan überdeckte Öffnung als Ringkanal ausgebildet ist, der konzentrisch zu der zentralen Öffnung verläuft und in einer Anschlussbohrung mündet. Bei einer vorteilhaften Ausführungsform der Erfindung, bei der das Verschlussorgan aus einem weichelastischen Werkstoff hergestellt ist, kommt dieses lediglich an den umlaufenden Kanten des Ringkanals zur Anlage. Dabei springen entweder die Kanten des Ringkanals gegenüber den angrenzenden Bereichen des Ventilkörpers hervor, oder das Verschlussorgan weist eine vorspringende umlaufende Wulst auf, die sich mit ihren Flanken an die Kanten des Ringkanals anlegt.

Bei einer anderen Ausbildung des Ventils liegt das Verschlussorgan mit zwei konzentrisch verlaufenden, den Ringkanal zwischen sich einschliessenden Dichtlippen auf einer Fläche des Ventilgehäuses auf. Bei einer weiteren Ausführungsform sind die beiden vorstehend beschriebenen Ausführungsformen kombiniert, so dass das Verschlussorgan an der inneren Kante des Ringkanals und mit einer aussen um den Ringkanal verlaufenden Dichtlippe auf einer Fläche des Ventilgehäuses aufliegt.

Bei einer zweckmässigen Weitergestaltung der Erfindung ist das Verschlussorgan an einer am äusseren Umfang eingespannten Membran angeformt. Dadurch ergibt sich der Vorteil, dass sich das Verschlussorgan bei einem ausreichend hohen Druck sehr weit öffnet und somit der Druckverlust in dem Ventil sehr gering gehalten wird.

Die Zeichnung veranschaulicht vorteilhafte Ausführungsbeispiele, und zwar zeigt Figur 1 einen Mittelschnitt durch ein Ventil, bei dem das Verschlussorgan in der rechten und in der linken Hälfte jeweils eine andere Ausführungsform darstellt. Figur 2 ist eine Ansicht im Schnitt nach der Linie A–A und Figur 3 zeigt eine weitere Ausführungsform des Verschlussorgans und seiner Sitzfläche.

Das dosenförmige Ventilgehäuse 1 ist mit einem Deckel 2 verschlossen. Im Boden des Ventilgehäuses 1 ist eine zentrale Öffnung 3 und eine konzentrisch hierzu angeordnete und als Ringkanal ausgebildete Öffnung 4 angeordnet. Beide Öffnungen laufen in Anschlussbohrungen 5, 6 aus, die als Abflussleitungen dienen. Die dritte Ventilöffnung 8 ist in die Seitenwandung des Ventilgehäuses 1 eingebracht und geht in eine Anschlussbohrung 9, welche als Zuflussleitung dient, über.

Die im Gehäuseboden angeordneten Öffnungen 3, 4 sind von einem Verschlussorgan 7 abgedeckt, und zwar derart, dass die Öffnungen 3, 4 untereinander und gegenüber der Öffnung 8 verschlossen sind. Hierbei ist es lediglich erforderlich, dass die als Ringkanal ausgeführte Öffnung 4 abgeschlossen ist. Damit ist auch gleichzeitig die Öffnung 3 gegenüber der Öffnung 4 und 8 abgedichtet.

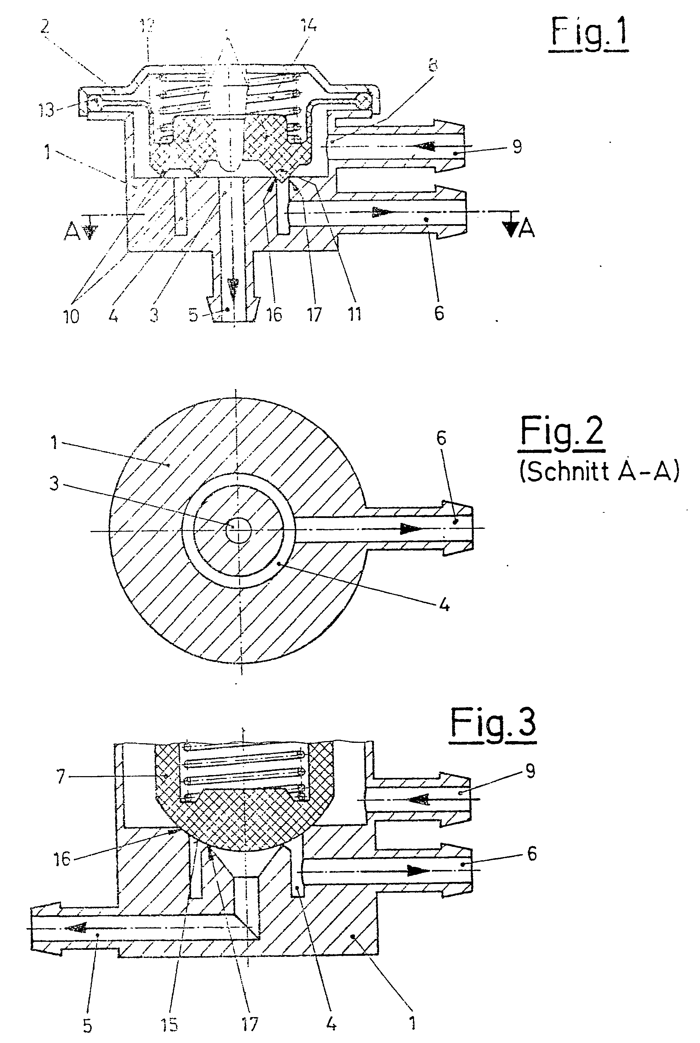

Eine in der linken Hälfte der Figur 1 dargestellte Ausführungsform eines Verschlussorgans 7 zeigt zwei konzentrisch zueinander umlaufende Dichtlippen 10, mit denen das Verschlussorgan 7 auf dem Boden des Dichtungskörpers 1 aufliegt. Eine andere Art der Abdichtung ist in der rechten Hälfte des in Figur 1 dargestellten Verschlussorgans 7 gezeigt. Hierbei weist das Verschlussorgan 7 eine umlaufende, im Querschnitt dreieckförmige Wulst 11 auf, die mit ihren Flanken an den freien Kanten 16, 17 der Ringnut 4 anliegt.

Das an sich steife Verschlussorgan 7 ist an eine elastische Membran 12 angeformt, die mit ihrem Rand 13 zwischen dem Ventilgehäuse 1 und dem Ventildeckel 2 eingespannt ist. Zwischen Verschlussorgan 7 und Deckel 2 ist eine Druckfeder 14 eingesetzt. Der Durchmesser der Druckfeder 14 entspricht in etwa dem Aussendurchmesser des Ringkanals 4.

Das in Figur 3 dargestellte Ventil zeigt ein Verschlussorgan 7, welches eine in etwa kugelförmige Schliessfläche 15 aufweist. Die an die umlaufenden Kanten 16, 17 des Ringkanals 14 angrenzenden Bereiche des Ventilbodens sind soweit abgesenkt, dass das Verschlussorgan lediglich auf den Kanten 16, 17 aufliegt.

## Patentansprüche

1. Ventil, insbesondere für Scheibenwaschanlagen bei Kraftfahrzeugen mit einer Eingangs- und zwei Ausgangsöffnungen (3, 4, 8), wobei die Eingangsöffnung (8) gegenüber beiden Ausgangsöffnungen (3, 4) und die beiden Ausgangsöffnungen (3, 4) untereinander durch ein einziges Verschlussorgan (7) absperrbar sind und eine (3) der Öffnungen zumindest in etwa zentral zum Verschlussorgan und mindestens eine (4) der beiden anderen Öffnungen seitlich neben der zentralen Öffnung (3) angeordnet ist und zusammen mit der zentralen Öffnung von dem Verschlussorgan dichtend überdeckt ist, dadurch gekennzeichnet, dass die seitlich der zentralen Öffnung (3) angeordnete und von dem Verschlussorgan (7) überdeckte Öffnung (4) als Ringkanal ausgebildet ist, der konzentrisch zu der zentralen Öffnung (3) verläuft und in einer Anschlussbohrung (6) mündet.

2. Ventil nach Anspruch 1, dadurch gekennzeichnet, dass das Verschlussorgan (7) lediglich an den umlaufenden Kanten (16, 17) des Ringkanals (4) zur Anlage kommt.

3. Ventil nach Anspruch 2, dadurch gekennzeichnet, dass das Verschlussorgan (7) eine zum Ringkanal (4) hin vorspringende Ringwulst (11) aufweist, die sich mit ihren Flanken an die Kanten (16, 17) des Ringkanals (4) anlegt.

4. Ventil nach Anspruch 1, dadurch gekennzeichnet, dass das Verschlussorgan (7) an der inneren Kante (17) des Ringkanals (4) und mit einer aussen um den Ringkanal verlaufenden Dichtlippe (10) auf einer Fläche des Ventilgehäuses (1) aufliegt.

5. Ventil nach Anspruch 1, dadurch gekennzeichnet, dass das Verschlussorgan (7) mit zwei konzentrisch verlaufenden, den Ringkanal (4) zwischen sich einschliessenden Dichtlippen (10) auf dem Ventilgehäuse (1) aufliegt.

6. Ventil nach einem oder mehreren der vorstehenden Ansprüche, dadurch gekennzeichnet, dass das Verschlussorgan (7) an einer am äusseren Umfang eingespannten Membran (12) angeformt ist.

7. Ventil nach einem oder mehreren der vorstehenden Ansprüche, dadurch gekennzeichnet, dass die Druckfeder (14) des Verschlussorgans (7) in ihrem Durchmesser in etwa dem Durchmesser der äusseren Dichtlippe (10) entspricht.

## Revendications

1. Robinet, en particulier pour installation de lave-glace pour véhicules comportant une ouverture d'entrée et deux ouvertures de sortie (3, 4, 8), un unique obturateur (7) pouvant verrouiller l'ouverture d'entrée (8) à l'égard des deux ouvertures de sortie (3, 4) ainsi que ces deux ouvertures de sortie (3, 4) l'une à l'égard de l'autre; l'une (3) des ouvertures ayant, au moins approximativement, une position centrale par rapport à l'obturateur et au moins l'une (4) des deux autres ouvertures étant disposée latéralement à côté de cette ouverture centrale (3) et étant recouverte de façon étanche, en même temps que l'ouverture centrale, par l'obturateur caractérisé en ce que l'ouverture (4) disposé latéralement par rapport à l'ouverture centrale (3) et recouverte par l'obturateur (7) étant conçue comme canal annulaire qui court concentriquement par rapport à l'ouverture centrale (3) et débouche dans un alésage de raccordement (6).

2. Robinet selon la revendication 1, caractérisé en ce que l'obturateur (7) ne vient au contact que sur les arêtes périphériques (16, 17) du canal annulaire (4).

3. Robinet selon la revendication 2, caractérisé en ce que l'obturateur (7) présente un bossage annulaire (11) qui fait saillie par rapport au canal annulaire (4) et s'appuie par ses flancs contre les arêtes (16, 17) du canal annulaire (4).

4. Robinet selon la revendication 1, caractérisé en ce que l'obturateur (7) repose contre l'arête interne (17) du canal annulaire (4) d'une part et, par une lèvre d'étanchéité (10), qui court à cheval sur le canal annulaire, sur une surface du carter de robinet (1) d'autre part.

5. Robinet selon la revendication 1, caractérisé en ce que l'obturateur (7) repose sur le carter de robinet (1) par deux lèvres d'étanchéité (10) qui courent concentriquement, le canal annulaire (4) étant enclos entre elles.

6. Robinet selon une ou plusieurs des revendications précédentes, caractérisé en ce que l'obturateur (7) vient de forme sur une membrane (12) bridée sur sa périphérie extérieure.

7. Robinet selon une ou plusieurs des revendications précédentes, caractérisé en ce que le ressort de compression (14) de l'obturateur (7) a un diamètre qui correspond à peu près au diamètre de la lèvre d'étanchéité externe (10).

## Claims

1. Valve, especially for screen-washing systems in motor vehicles, with one inlet and two outlet orifices (3, 4, 8), in which valve the inlet orifice (8) can be shut off from both outlet orifices (3, 4) and the two outlet orifices (3, 4) from one another by means of a single closing member (7), and one (3) of the orifices is located at least approximately centrally in respect of the closing member, and at least one (4) of the other two orifices is located laterally next to the central opening (3) and is covered, together with the central orifice, by the closing member in a leak-tight manner, characterised in that the orifice (4), which is located to the side of the central orifice (3) and which is covered by the closing member (7), is designed as an annular channel which runs concentrically to the central orifice (3) and which opens into a connecting bore (6).

2. Valve according to Claim 1, characterised in that the closing member (7) comes to rest only on the peripheral edges (16, 17) of the annular channel (4).

3. Valve according to Claim 2, characterised in that the closing member (7) has an annular bead (11) which projects towards the annular channel (4) and the flanks of which come to rest on the edges (16, 17) of the annular channel (4).

4. Valve according to Claim 1, characterised in that the closing member (7) rests on the inner edge (17) of the annular channel (4) and, by means of a sealing lip (10) running round the annular channel on the outside, on a face of the valve housing (1).

5. Valve according to Claim 1, characterised in that the closing member (7) rests on the valve housing (1) by means of two sealing lips (10) which run concentrically and which enclose the annular channel (4) between them.

6. Valve according to one or more of the preceding claims, characterised in that the closing member (7) is moulded on a diaphragm (12) which is clamped on the outer circumference.

7. Valve according to one or more of the preceding claims, characterised in that the diameter of the compression spring (14) of the closing member (7) corresponds approximately to the diameter of the outer sealing lip (10).

Fig.1

Fig.2
(Schnitt A-A)

Fig.3